# EUROPEAN PATENT SPECIFICATION

(11) **EP 0 747 243 B1**
(45) Date of publication and mention of the grant of the patent: **28.02.2001**
(21) Application number: 96304178.5
(22) Date of filing: 06.06.1996
(51) Int. Cl.: B60C 19/08, B60C 11/18, B29D 30/52

(54) **Vehicle tyre with dissipation of electrostatic charges**
Fahrzeugreifen mit Ladungsableitung
Bandage pneumatique pour véhicule, permettant la dissipation de charges électrostatiques

(30) Priority: 08.06.1995 DE 19520996
(43) Date of publication of application: 11.12.1996
(73) Proprietor: Dunlop GmbH, 63450 Hanau (DE)
(72) Inventor: Gerresheim, Manfred, 63179 Obertshausen-Hausen (DE); Schomburg, Jurgen, 63517 Rodenbach (DE); Leinweber, Hubert, 63454 Hanau (DE); Ditzel, Eduard, 63517 Rodenbach (DE); Endres, Wilhelm, 63592 Hasselroth (DE)
(74) Representative: Stewart, Charles Geoffrey

(56) References cited:
- EP-A- 0 718 127
- GB-A- 544 757
- US-A- 4 258 083

## Description

The present invention relates to a tyre of the type disclosed in German patent application P44 45 758.8 which relates to a pneumatic vehicle tyre having a tread strip of electrically insulating or poorly conductive material forming the tyre tread and a layer which conducts electricity well and/or another tyre component which conducts electricity well arranged beneath the tread strip.

The underlying problem lies in the fact that the bodywork of a vehicle equipped with such tyres can charge up electrically due to a lack of electrical connection to the carriageway or road surface. This can, for example, go so far, that spark discharges arise, for example when the driver of the motor vehicle wishes to open the filler cap at the filling station. A poor or non-existent charge dissipation can moreover lead to crackly noises in the car radio when driving over metallic articles such as the expansion joints of bridges or sewer covers.

The main application is thus based on the object of setting forth a pneumatic tyre of the initially named kind which ensures an adequate dissipation of electrical charge from the vehicle bodywork to the carriageway in order to prevent electrostatic charging.

An anti-static tyre utilising a conductive liquid rubber cement applied variously to the inside and outside of selected components including the mating skived ends forming the spliced joint of the tread band is known from GB 544 757

The present invention now relates to a development of this type of pneumatic vehicle tyre.

According to the present invention a tyre having a tread strip of electrically insulating or poorly conductive material forming the tyre running surface and a conducting layer of good electrical conductivity arranged beneath the tread strip, a layer of material which conducts electricity well, being provided between the two mutually abutting end faces of the tread band which is bent into the ring shaped tread strip; the layer extending radially outwardly to the ground contacting surface of the tread strip and being electrically connected to the conducting layer beneath the tread strip which is connected to the tyre bead region in a manner which conducts electricity well, characterised by a strip of electrically conducting rubber having a thickness of 0.1 to 0.5 mm which is embedded in the tread strip the strip being orientated in the circumferential direction of the tyre and extending along the entire tread strip, the strip having end faces which form a part of at least one of the two mutually abutting end faces of the tread strip so as to be in electrical contact thereto and in that the strip is electrically connected to one of the electrically conductive tread wings or to a tyre side wall via a strip of material which conducts electricity well and which is provided in the tread strip and extends transversely or obliquely to the circumferential direction of the tyre.

Through the material between the two end faces of the trade strip and the other electrically well conducting components of the tyre, an electrical connection is produced at least once per tyre rotation between the bodywork and the carriageway despite the tread being of low conductivity. In this way charge can flow from the vehicle bodywork to the carriageway at least once per tyre rotation so that electrostatic charging up of the vehicle bodywork is prevented.

Thus the assembly of the tyre is impaired very little. Moreover, the manufacture of such a tyre is relatively simple since the rubber solution which is customarily applied to the end faces of a protector as a bond promoter and later vulcanised together with the tyre can serve as the layer which conducts electricity well between the two end faces of the tread strip. A bond promoter of this kind is required in order to hold together at their abutment faces the tyre components which are brought together in ring-like manner on a cylindrical tyre building drum. Thus no additional manufacturing step is necessary to form the layer which conducts electricity well.

The rubber layer which is produced in this way in the abutment joint of the tyre thus stands in electrical connection with further tyre components which conduct electricity well, in particular with the tread base. The further dissipation of electrical charge can take place from the tread base via the breaker, the carcass and the tyre bead. A further possibility for the dissipation of electrical charge exists via the bead wings, when these are made to conduct electricity well as these too contact the joint layer. Also in this arrangement a strip of material of good electrical conductivity is provided entirely circumferentially round the tyre and in electrical contact with the conductive end face component.

The electrical connection of the rubber layer to the strip of material which conducts electricity well forming a part of the tyre tread is ensured in that this strip is so embedded in the tread strip that it forms a part of at least one of the two end faces of the tread strip which abut together. The rubber layer present in the abutment joint is in contact both with this strip and also with the tread base layer.

The strip of material which conducts electricity well embedded in the tread strip is orientated in the circumferential direction of the tyre and extends over the entire tread strip. In this way an electrical connection between the vehicle bodywork and the carriageway is ensured in every rotational position of the tyre, which is desirable for safety reasons.

In accordance with this design a single strip which extends over the full tyre circumference is be provided, so that at least one part of the strip always forms a part of a tyre contact area independently of the tyre position. In this manner it is ensured that in every rotational position of the tyre a connection which conducts electricity well is present between the road surface and the vehicle bodywork.

The charge dissipation takes place in this design, starting from the vehicle bodywork via the tyre rim, the tyre bead, the side parts of the tyre, if present via the wings, then via the strip or strips extending transversely or obliquely to the circumferential direction of the tyre. The strip extending transversely or obliquely to the circumferential direction of the tyre is preferably arranged in the vicinity of a groove section extending transversely or obliquely to the circumferential direction of the tyre, in order to ensure an electrical connection between the vehicle bodywork and the road even when the tyre profile is worn. During the formation of the tyre profile the strip is pressed into the groove section so that it forms a part of the side wall of the groove section and thus produces an electrical connection even when the tyre profile is worn away.

In accordance with a further embodiment the strip extending in the circumferential direction is formed around a longitudinal extending bead groove, in particular at the base of the groove. In this manner the electrical connection between the tread and other tyre component which conducts electricity well is maintained via the embedded strip even when the tyre profile is worn away. The strip namely forms in this embodiment a part of the lateral boundary wall of the circumferentially extending longitudinal groove so that at least the part of the strip which is located in the groove can take care of electrical dissipation even when the tyre profile is worn away.

The strip is arranged in the region of the mid-circumferential plane of the tyre and has a thickness of 0.1 to 0.5 mm, and preferably of about 0.3 mm. This design has proved itself to be particularly advantageous having regard to a good dissipation of electrical charge and low deterioration of the other tyre characteristics.

Another further embodiment relates to a method of manufacturing a tyre with a strip of electrically well conducting material embedded in the tread strip. In accordance with the invention it is proposed that a solution of good electrical conductivity, in particular rubber solution, is applied to at least one tread strip end prior to the vulcanisation and is vulcanised together with the latter. In this case a rubber solution which is used in tyre manufacture as a bond improver can also be used as the solution which conducts electricity well. The manufacturing of an embedded strip through the application of a solution of this kind to the tread strip is particularly simple, in particular the solution also penetrates into preformed groove sections. During the moulding of the tyre profile and the vulcanising of the tyre the desired rubber layer embedded in the tread strip then arises form the rubber solution.

An embodiment of the invention is illustrated in the drawing and will be described in the following. There are shown:
Figure 1 a cross-section through a vehicle tyre in accordance with the invention which includes several embodiment;
Figure 2 a perspective plan view onto the tread strip for a vehicle tyre of a second embodiment in accordance with the invention prior to moulding of the tyre profile;

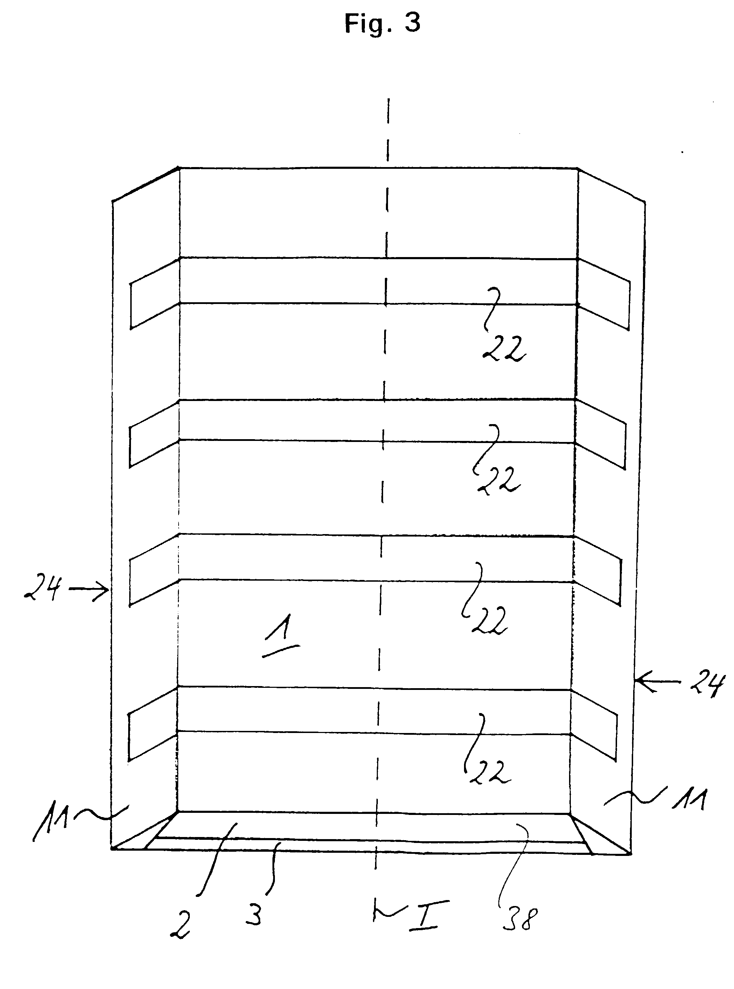

Figure 3 a further variant of the tread strip; and
Figure 4 yet another variant of the tread strip.

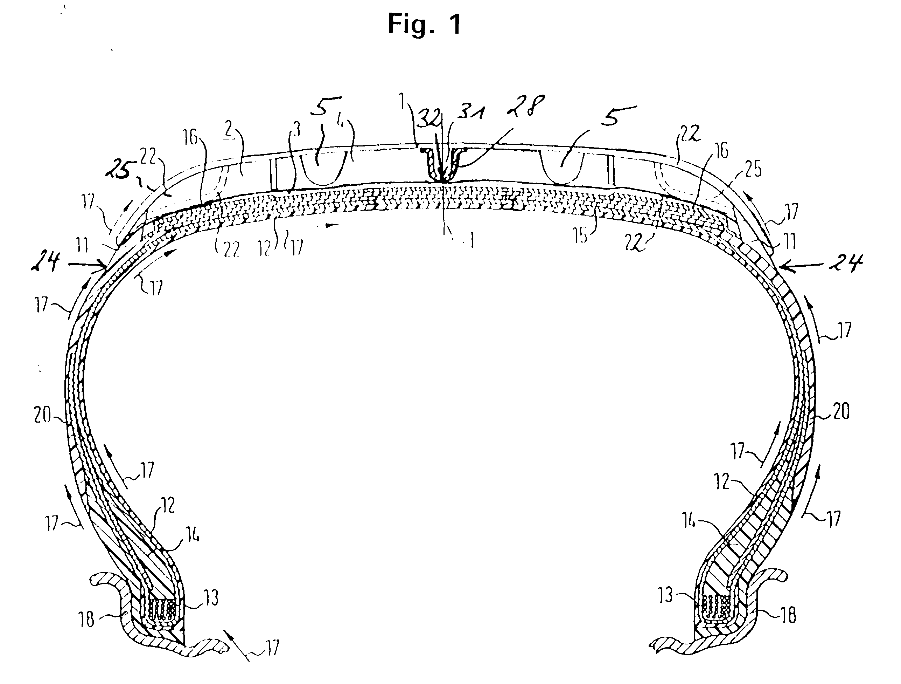

Figure 1 shows a vehicle tyre formed in accordance with the invention. This vehicle tyre is a radial tyre with a tread strip 2 forming the tyre running surface 1 beneath which there is present a tread base layer 3.

The main structure of the tyre comprises a radially inwardly disposed carcass 12 and two bead rings 13 with bead apexes 14. The ends of the carcass 12 are turned around the bead rings 13 and the bead apexes 14 for anchorage. At the two axially outer sides of the tyre the latter is completed by side walls 20. In the transition region between the side wall 20 and the tread strip 2 the tyre has tread wings 11.

Between the tread base layer 3 and the carcass 12 there are moreover a breaker 15, for example two steel cord breaker plies, and a breaker cover 16, for example in the form of a nylon bandage.

The tread strip 2 of the tyre of the invention consists of electrically non-conducting or poorly conducting material, for example a rubber mixture with a high silica content. The tread base layer 3 consists of a rubber mixture which conducts electricity well usually containing a high level of carbon black. The carcass 12, the breaker 15 together with the bandage 16 and the side wall 20 likewise comprise rubber compounds which conduct electricity well.

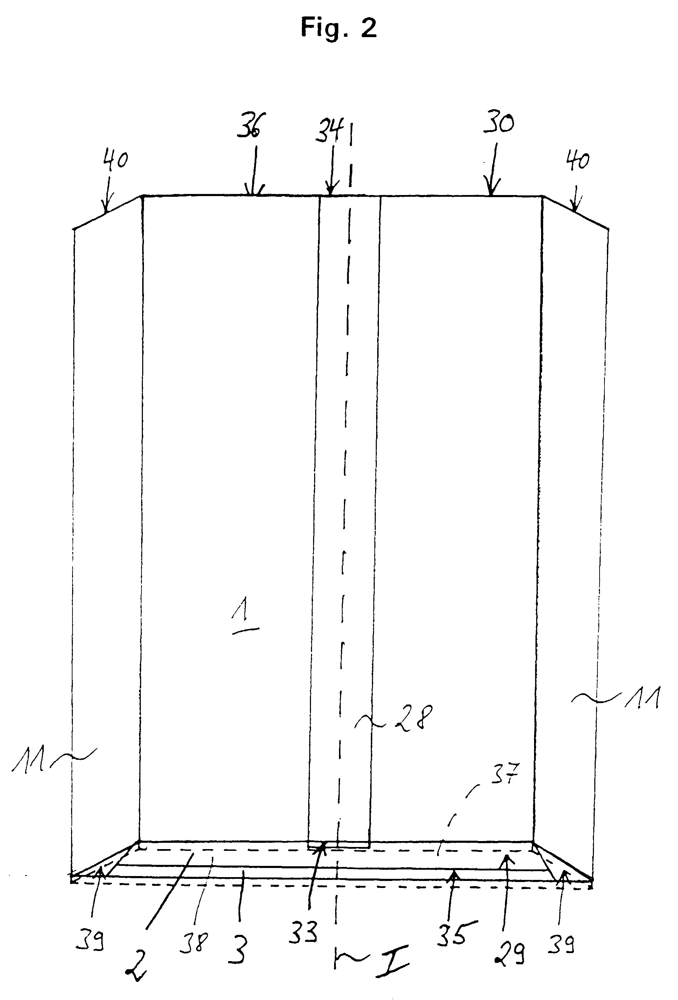

The tyre tread strip 2 comprises a strip of material which is joined end-to-end when it is assembled around the shaped tyre assembly. The end faces are therefore normally brought into abutment by the tyre builder. In the present invention however, a layer 37 of good electrical conductivity material, as indicated by the broken lines in Figure 2, is placed between the abutting ends such that the layer 37 reaches to the ground contacting surface of the tread and also is in good electrical contact with the tread base layer 3. In this manner an electrical connection is produced between the layer 3 and the tread surface at the joint and charge dissipation can thus take place to the road surface once per revolution of the tyre.

The layer 37 may comprise a separate rubber component or more preferably comprises a conducting tread joint solution which is often already used to promote the adhesion of the tread end faces on assembly.

The second embodiment shown also in Figure 1 and in addition in Figure 2, has a strip 28 extending in the circumferential direction of the tyre and within its tyre tread band 38 has end faces 33 and 34 which, respectively, form parts of the two end faces 29 and 30 of the tread band 38. This gives the additional feature that the conducting path through the layer 37 is connected to this strip 28 and thus in service a conducting path is provided continuously during rolling of the tyre.

In one preferred arrangement the strip 28 is positioned so as to form the side walls and base of a circumferentially extending tread groove. This provides a conducting path throughout the legal life of the tyre.

In another arrangement, also incorporated in Figure 1, the tyre tread strip 2, which is of low conductivity material, has tread wing edges 11 which are of electrically conducting rubber. Whilst these may be in contact with the electrically conducting tread base layer 3 they are also in electrical contact with the layer 37. This provides good electrical conductivity between the wings 11 and the remainder of the tyre. At least one strip 22 of material which conducts electricity well extends transversely to the circumferential direction of the tyre over the running surface 1 of the tyre up to and over the two wings 11, and indeed preferably up to and shortly above the radially inner edge 24 of the wings 11. This strip is thereby so arranged so that it forms at least a part of the wide walls of a groove section 25 extending transversely or obliquely to the circumferential direction of the tyre up to one of the wings. In this manner the electrical connection between the tyre running surface 1 and the wings 11 is maintained even when the tyre profile is worn down. The dissipation of electrical charge takes place in this variant, starting from the vehicle bodywork, via the rim 18, the carcass 12, the side parts 20, from there via the wings 11 and finally via the strips 22 to the carriageway. Naturally both variants can also be combined with one another.

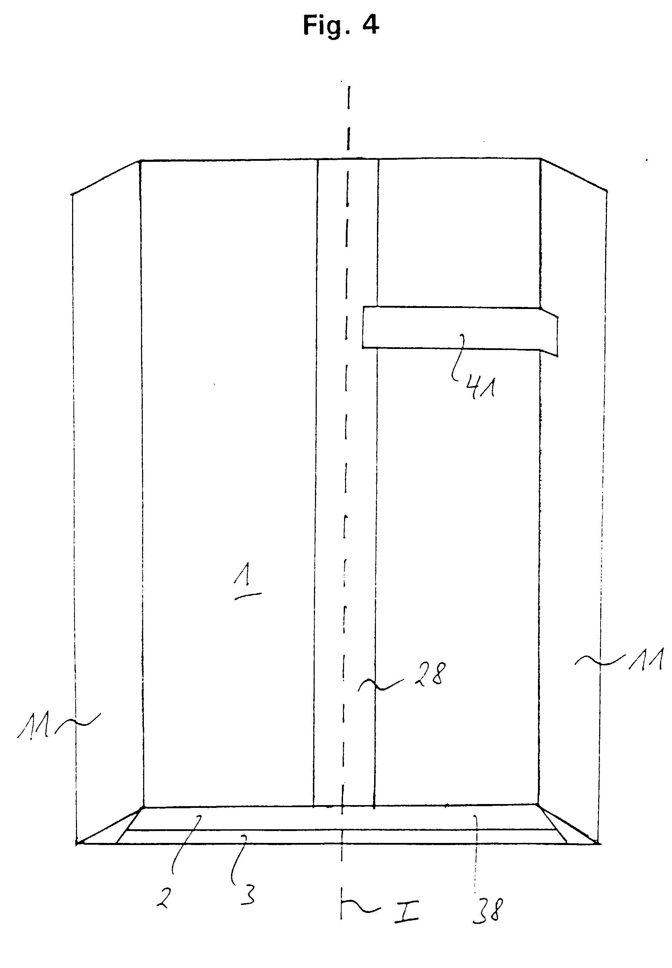

In yet another variant shown in Figure 4 a strip 28 of material which conducts electricity well extends in the circumferential direction of the tyre over the entire tread band 38. A strip 41, which is likewise of material which conducts electricity well, is present in this embodiment in the tread surface 1 transverse to the tyre circumferential direction and extends at one end over the strip 28 and at the other end over one of the two wings 11.

This strip 41 is preferably also arranged so that it forms at least a part of the side walls of a groove section extending transversely or obliquely to the circumferential direction of the tyre up to one of the wings. The dissipation of electrical charge takes place, starting from the vehicle bodywork, via the rim 18, the carcass 12, the side parts 20, from there via the wings 11, then via the strip 41 and finally via the strip 28 to the carriageway. This variant can also be combined with the first variant illustrated in Figure 2.

The strips 22 and 41 can likewise be embedded in the tread strip 2. The manufacture of the embedded strips 22,41 can in particular take place in such a way that a rubber solution of good electrical conductivity, for example also the rubber solution used as a bond improver, is applied transversely over the tread strip 2 and the wings 11 before the tyre is moulded and vulcanised in the heated tyre mould. During the moulding of the tyre profile the rubber solution is pressed into the tread strip and is then vulcanised together with the latter so that an embedded rubber layer forms.

The strip 28 of the first variant can also be embedded in this manner into the tread strip 2. It is however also possible to apply a strip 28 of material which conducts electricity well to the tread strip 2 and to subsequently mould and vulcanise the so prepared tyre in the heated tyre mould. The same applies to the tread strips 22 and 41.

## Claims

1. A vehicle tyre having a tread strip (2) of electrically insulating or poorly conductive material forming the tyre running surface (1) and a conducting layer (3) of good electrical conductivity arranged beneath the tread strip (2), a layer (37) of material which conducts electricity well, being provided between the two mutually abutting end faces (29,30) of the tread band (38) which is bent into the ring shaped tread strip (2); the layer (37) extending radially outwardly to the ground contacting surface of the tread strip (2) and being electrically connected to the conducting layer (3) beneath the tread strip which is connected to the tyre bead region (13) in a manner which conducts electricity well, characterised by a strip (28) of electrically conducting rubber having a thickness of 0.1 to 0.5 mm which is embedded in the tread strip (2) the strip (28) being orientated in the circumferential direction of the tyre and extending along the entire tread strip (2), the strip (28) having end faces (33,34) which form a part of at least one of the two mutually abutting end faces (29,30) of the tread strip (2) so as to be in electrical contact thereto and in that the strip (28) is electrically connected to one of the electrically conductive tread wings (11) or to a tyre side wall (20) via a strip (41) of material which conducts electricity well and which is provided in the tread strip and extends transversely or obliquely to the circumferential direction of the tyre.

2. A tyre according to claim 1, characterised in that in the tread strip (2) a plurality of strips (28) are provided.

3. A tyre in accordance with claim 1, characterised in that the strip (41) which extends transversely or obliquely to the circumferential direction of the tyre is arranged in the region of a groove section which extends transversely or obliquely to the circumferential direction of the tyre.

4. A tyre in accordance with any one of claims 1 to 3, characterised in that the strip (28) includes a circumferential groove (31).

5. A tyre in accordance with any of claims 1 to 4, characterised in that the strip (28) is arranged in the region of the circumferential mid-plane (I) of the tyre.

6. A tyre in accordance with any of claims 1 to 5, characterised in that the strip (28) has a thickness of 0.3 mm.

7. A method for the manufacture of a tyre in accordance with claim 1, characterised in that a solution of good electrical conductivity, in particular a rubber solution serving as a bond improver, is applied to at least one of the abutment surfaces (29,30) of the tread strip (2).

8. A method for the manufacture of a tyre according to claim 7, characterised in that a strip (28) of material of good electrical conductivity is embedded in the tread strip (2).

9. A method in accordance with claim 7 or 8, characterised in that a rubber solution used in tyre manufacturing as a bond improver serves as the solution of good electrical conductivity.

## Patentansprüche

1. Fahrzeugreifen mit einem Laufflächenstreifen (2) aus elektrisch isolierendem oder schlecht leitendem Material, der die Reifenlauffläche (1) bildet, und einer leitenden Schicht (3) mit guter elektrischer Leitfähigkeit, die unterhalb des Laufflächenstreifens (2) angeordnet ist, wobei eine Elektrizität gut leitende Materialschicht (37) zwischen den beiden aneinander anschlagenden Endflächen (29, 30) des zu dem ringförmigen Laufflächenstreifen (2) gekrümmten Laufflächenbandes (38) vorgesehen ist, wobei die Schicht (37) sich radial nach außen zur Bodenkontaktfläche des Laufflächenstreifens (2) erstreckt und elektrisch mit der leitenden Schicht (3) unterhalb des Laufflächenstreifens verbunden ist, die mit dem Reifenwulstbereich (13) auf eine Elektrizität gut leitende Weise verbunden ist, gekennzeichnet durch einen Streifen (28) aus elektrisch leitendem Gummi mit einer Dicke von 0,1 bis 0,5 mm, der in dem Laufflächenstreifen (2) eingebettet ist, wobei der Streifen (28) in der Umfangsrichtung des Reifens orientiert ist und sich entlang des gesamten Laufflächenstreifens (2) erstreckt, wobei der Streifen (28) Endflächen (33, 34) aufweist, die einen Teil von zumindest einer der beiden aneinander anschlagenden Endflächen (29, 30) des Laufflächenstreifens (2) bilden, so daß sie in elektrischem Kontakt mit diesen stehen, und dadurch, daß der Streifen (28) elektrisch mit einem der elektrisch leitenden Laufflächenwings (11) oder mit einer Reifenseitenwand (20) über einen Elektrizität gut leitenden Materialstreifen (41) verbunden ist, der in dem Laufflächenstreifen vorgesehen ist und sich quer oder schräg zur Umfangsrichtung des Reifens erstreckt.

2. Reifen nach Anspruch 1, dadurch gekennzeichnet, daß in dem Laufflächenstreifen (2) mehrere Streifen (28) vorgesehen sind.

3. Reifen nach Anspruch 1, dadurch gekennzeichnet, daß der Streifen (41), der sich quer oder schräg zur Umfangsrichtung des Reifens erstreckt, im Bereich eines Rillenabschnittes angeordnet ist, der sich quer oder schräg zur Umfangsrichtung des Reifens erstreckt.

4. Reifen nach einem der Ansprüche 1 bis 3, dadurch gekennzeichnet, daß der Streifen (28) eine Umfangsrille (31) umfaßt.

5. Reifen nach einem der Ansprüche 1 bis 4, dadurch gekennzeichnet, daß der Streifen (28) im Bereich der Umfangsmittelebene (I) des Reifens angeordnet ist.

6. Reifen nach einem der Ansprüche 1 bis 5, dadurch gekennzeichnet, daß der Streifen (28) eine Dicke von 0,3 mm aufweist.

7. Verfahren zur Herstellung eines Reifens nach Anspruch 1, dadurch gekennzeichnet, daß eine Lösung mit guter elektrischer Leitfähigkeit, insbesondere eine Kautschuklösung, die als Bindungsverbesserer dient, auf mindestens eine der Anschlagflächen (29, 30) des Laufflächenstreifens (2) aufgebracht wird.

8. Verfahren zur Herstellung eines Reifens nach Anspruch 7, dadurch gekennzeichnet, daß ein Streifen (28) aus Material mit guter elektrischer Leitfähigkeit in dem Laufflächenstreifen (2) eingebettet wird.

9. Verfahren nach Anspruch 7 oder 8, dadurch gekennzeichnet, daß eine Kautschuklösung, die bei der Reifenherstellung als Bindungsverbesserer verwendet wird, als die Lösung mit guter elektrischer Leitfähigkeit dient.

## Revendications

1. Pneumatique de véhicule possédant un bandage (2) de bande de roulement d'un matériau isolant ou peu conducteur de l'électricité, formant la surface de roulement (1) du pneumatique, et une couche conductrice (3) de bonne conductivité disposée sous le bandage (2) de bande de roulement, une couche (37) d'un matériau qui conduit bien l'électricité étant placée entre les deux faces d'extrémité (29, 30) en butée l'une avec l'autre de la bande (38) de la bande de roulement qui est courbée sous forme du bandage (2) de bande de roulement de forme annulaire, la couche (37) s'étendant radialement vers l'extérieur, vers la surface de contact avec le sol du bandage (2) de bande de roulement et étant connectée électriquement à la couche conductrice (3) sous le bandage de bande de roulement qui est raccordé à la région (13) de talon du pneumatique d'une manière qui conduit bien l'électricité, caractérisé par un bandage (28) d'un caoutchouc conducteur de l'électricité ayant une épaisseur de 0,1 à 0,5 mm, enrobé dans le bandage (2) de bande de roulement, le bandage (28) étant orienté dans la direction circonférentielle du pneumatique et s'étendant sur tout le bandage (2) de bande de roulement, le bandage (28) ayant des faces d'extrémité (33, 24) qui font partie de l'une au moins des deux faces d'extrémité (29, 30) en butée du bandage (2) de bande de roulement afin qu'elles forment un contact électrique avec elle, et en ce que le bandage (28) est connecté électriquement à l'une des ailes (11) de bande de roulement, conductrices de l'électricité, ou à un flanc (20) du pneumatique par l'intermédiaire d'un bandage (41) d'un matériau qui conduit bien l'électricité et qui est placé de le bandage de bande de roulement et s'étend transversalement ou obliquement par rapport à la direction circonférentielle du pneumatique.

2. Pneumatique selon la revendication 1, caractérisé en ce que plusieurs bandages (28) sont disposés dans le bandage (2) de bande de roulement.

3. Pneumatique selon la revendication 1, caractérisé en ce que le bandage (41) qui s'étend transversalement ou obliquement à la direction circonférentielle du pneumatique est placé dans la région d'un tronçon à gorge qui s'étend transversalement ou obliquement par rapport à la direction circonférentielle du pneumatique.

4. Pneumatique selon l'une quelconque des revendications 1 à 3, caractérisé en ce que le bandage (28) comprend une gorge circonférentielle (31).

5. Pneumatique selon l'une quelconque des revendications 1 à 4, caractérisé en ce que le bandage (28) est placé dans la région du plan circonférentiel médian (I) du pneumatique.

6. Pneumatique selon l'une quelconque des revendications 1 à 5, caractérisé en ce que le bandage (28) a une épaisseur de 0,3 mm.

7. Procédé de fabrication d'un pneumatique selon la revendication 1, caractérisé en ce qu'une solution ayant une bonne conductivité, en particulier une dissolution de caoutchouc utilisée comme adjuvant accroissant la liaison, est appliquée à l'une au moins des surfaces de butée (29, 30) du bandage (2) de bande de roulement.

8. Procédé de fabrication d'un pneumatique selon la revendication 7, caractérisé en ce qu'un bandage (28) d'un matériau ayant une bonne conductivité est enrobé dans le bandage (2) de bande de roulement.

9. Procédé selon la revendication 7 ou 8, caractérisé en ce qu'une dissolution de caoutchouc utilisée pour la confection du pneumatique comme adjuvant accroissant la liaison est utilisée comme solution possédant une bonne conductivité.
